# EUROPEAN PATENT APPLICATION

(11) **EP 1 065 537 A2**
(43) Date of publication of application: **03.01.2001**
(21) Application number: 00500136.7
(22) Date of filing: 28.06.2000
(51) Int. Cl.: G02B 6/255, G02B 6/287, H05B 3/10, B29C 65/02

(54) **Oven for fusing polymer optical fibres**

(30) Priority: 02.07.1999 ES 9901472
(71) Applicant: Advanced Fiber Optics, S.L., 08024 Barcelona (ES)
(72) Inventor: Jimenez Cortes, Juan Carlos, 08024 Barcelona (ES)
(74) Representative: Duran Moya, Carlos

(57) **Abstract**

The oven comprises a body of aluminium alloy provided with a central opening for receiving cylindrical borosilicate test tubes, carrying the bundle of fibres, which test tubes are guided by a test-tube holding plate adaptable to different diameters, and the body of the oven including a heating system controlled by means of a central micro-controller connected to the control micro-computerof the apparatus, the test tubes being covered by a thin layer coating for an infra-red filter.

## Description

The present invention refers to an oven intended for fusing polymer optical fibres which provides significant advantages over the prior art for said objective of fusing optical fibres.

The main objective of the present invention consists in achieving a greater capacity of fine regulation of the process of fusing optical fibres, and also significant features of rapidity and economy in the operation of the apparatus.

The apparatus of the present invention basically comprises an oven consisting of aluminium alloy with a critical metallic mass of approximately 2.5 cm around the hollow internal object-carrying space, having incorporated in its mass a heating system of specific geometry intended to obtain the appropriate temperature homogenously. The body of the oven is covered with ceramic fibre plates to reduce to a minimum the dissipation of heat by convection.

The recipients in which the fibres are placed for the fusion process are manufactured of borosilicate glass coated by means of a thin layer filter for infra-red rays, which graduates the penetration of the heat into the mass of fibres.

The operating program of the apparatus is regulated by a programmable micro-controller and automatic control which establish the heating cycle, obtaining temperatures variable between 80 and 160°C beginning with a pre-heating phase in which the oven starts up with a stable temperature between 80 and 100°C, depending on the fibre to be used. After the introduction of the borosilicate recipient, the programmer will maintain the temperature for a variable time depending on the composition of the fibre, in order to obtain the expansion of the polymer on reaching the deformation phase, it being possible to indicate, by way of example, periods of time between 8 and 10 minutes. The temperature will then be gradually increased at intervals of 5 to 8 degrees celsius until the fusion temperature is reached, maintaining it for some 2 minutes. Once fusion has taken place, the temperature will be gradually reduced in order to avoid thermal shocks which would affect the molecular orientation.

The oven will have optical/acoustic indicators both for having reached the initial working temperature of between 80 and 100°C and for the termination of the fusion process.

For greater understanding thereof, there follow, by way of non-limiting example, drawings showing the oven of the present invention.

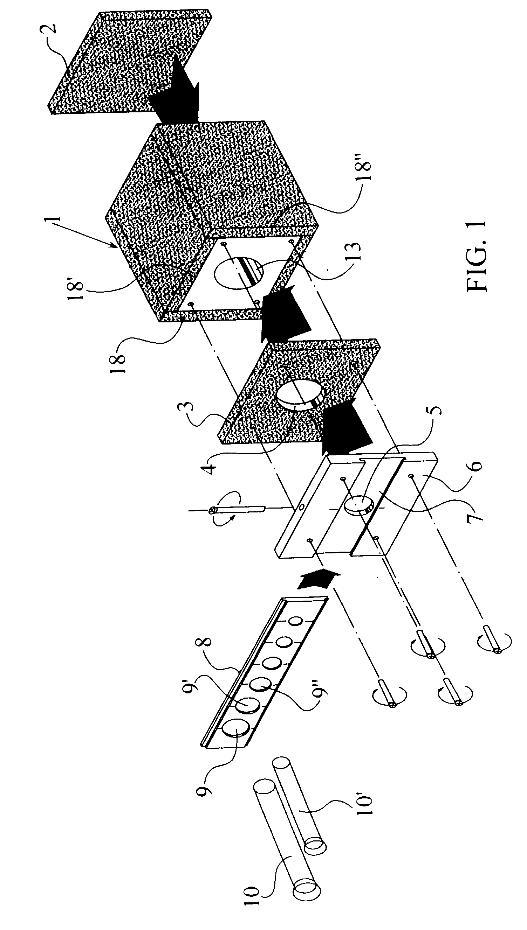

Figure 1 shows diagrammatically a perspective view of the parts constituting the oven and the test-tube holding system.

Figure 2 likewise shows diagrammatically the heating assembly of the oven.

Figure 3 shows a diagrammatic section of the arrangement of a test-tube with a bundle of fibres in the interior of the oven.

Figures 4 and 5 show diagrammatically a section illustrating fibres encapsulated with epoxy and fused fibres.

As shown in the drawings, the oven of the present invention comprises a body structure 1 consisting of an aluminium alloy and covered with ceramic glass fibre with lateral covers 18, 18', 18", a lower cover 2 and an upper cover 3 of the same material, said upper cover 3 having a central aperture 4 intended to coincide with the aperture 5 of a test-tube holding plate 6 provided with a guide passage 7 for the test-tube tray 8 which is intended to fit into said guide passage 7, for example by means of a substantially dovetailed structure and which bears a multiplicity of apertures 9, 9', 9" ... for the test-tubes of different dimensions such as 10, 10'...

The test-tubes will be produced from borosilicate glass and their surface will be provided with a coating by means of a fine layer infra-red filter of 700 nm-80%.

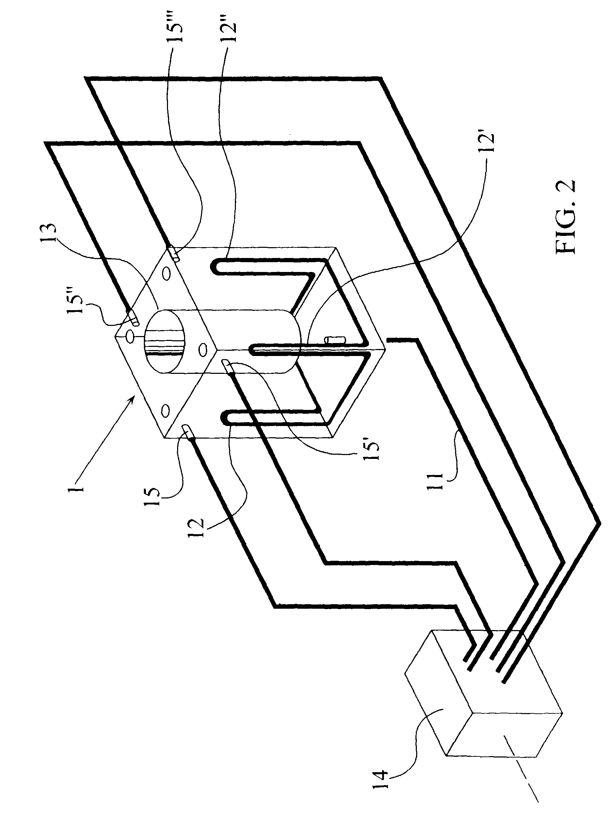

The body 1 of the oven will be provided with a heating system shown diagrammatically in Figure 2, in which the heating circuit 11 is shown which connects with an internal circuit of the body 1 in which various loops are formed, such as 12, 12', 12", in an arrangement parallel to the axis of the chamber 13, intended to receive the test-tube. A micro-controller 14 will effect the temperature control conveniently regulated by a micro-computer which will act according to the desired heating program.

The micro-controller 14 will receive a multiplicity of probes such as those shown diagrammatically with the numbers 15, 15', 15", 15'".

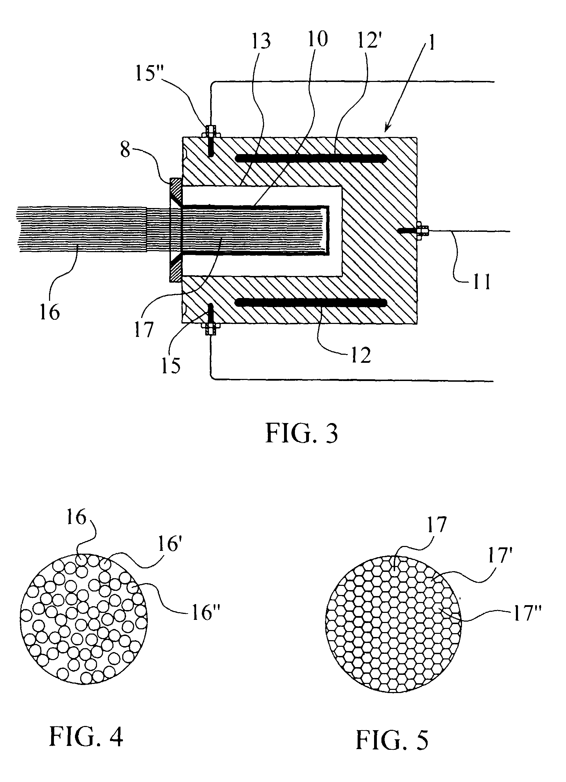

Figure 4 shows a multiplicity of fibres 16, 16', 16"... encapsulated with epoxy, and Figure 5 shows fused fibres 17, 17', 17"... substantially in the shape of a hexagonal honeycomb.

## Claims

1. Oven for fusing polymer optical fibres, characterized in that it comprises a body of aluminium alloy provided with a central opening for receiving cylindrical borosilicate test-tubes, carrying the bundle of fibres, which test-tubes are guided by a test-tube holding plate adaptable to different diameters, and the body of the oven including a heating system controlled by means of a central micro-controller connected to the control micro-computer of the apparatus.

2. Oven for fusing polymer optical fibres, according to claim 1, characterized in that the body of the oven is covered with ceramic glass fibre comprising plates constituting the lateral walls and the bottom wall, as well as an upper plate provided with an aperture for the passage of the test-tubes.

3. Oven for fusing polymer optical fibres, according to claim 1, characterized in that the test-tube holding plate is provided with a multiplicity of apertures of different diameters for different test-tubes and slides in front of the entry opening of the oven.

4. Oven for fusing polymer optical fibres, according to claim 1, characterized in that the borosilicate glass test-tubes are provided with a thin layer coating for an infra-red filter.

5. Oven for fusing polymer optical fibres, according to claim 4, characterized in that the infra-red filter is of 700 nm-80%.

6. Oven for fusing polymer optical fibres, according to claim 1, characterized in that the mass of aluminium has a critical dimension of 2.5 cm around the test-tube holding chamber.
